# EUROPEAN PATENT APPLICATION

(11) **EP 3 750 425 A1**
(43) Date of publication of application: **16.12.2020**
(21) Application number: 19179907.1
(22) Date of filing: 13.06.2019
(51) Int. Cl.: A24F 47/00, H04W 4/80, H04W 8/00, H04L 29/08

(54) **A SYSTEM AND METHOD FOR MANAGING A SMOKING SUBSTITUTE DEVICE**

(71) Applicant: NERUDIA LIMITED, Liverpool Merseyside L24 9HP (GB)
(72) Inventor: The designation of the inventor has not yet been filed
(74) Representative: Mewburn Ellis LLP

(57) **Abstract**

A system and method are provided for managing a smoking substitute device. The smoking substitute device comprises a memory which stores a whitelist, configured to identify one or more devices with which the smoking substitute device is permitted to wirelessly communicate, and one or more hardware components other than a button. The smoking substitute device is configured to operate, under certain conditions, in a whitelist operating mode in which the smoking substitute device is configured to advertise to only the one or more devices identified by the whitelist. The smoking substitute device is further configured to operate, under certain conditions, in an advertising operating mode in which the smoking substitute device is configured to advertise to devices regardless of whether those devices are identified by the whitelist. The smoking substitute device is further configured to, upon detection of a predetermined action being performed that involves the one or more hardware components, transition from operating in the whitelist operating mode to operating in the advertising operating mode

## Description

### TECHNICAL FIELD

The present invention relates to smoking substitute devices. In particular, although not exclusively, it relates to the management of network-enabled smoking substitute devices and their communication with other devices.

### BACKGROUND

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Conventional combustible smoking articles, such as cigarettes, typically comprise a cylindrical rod of tobacco comprising shreds of tobacco which is surrounded by a wrapper, and usually also a cylindrical filter axially aligned in an abutting relationship with the wrapped tobacco rod. The filter typically comprises a filtration material which is circumscribed by a plug wrap. The wrapped tobacco rod and the filter are joined together by a wrapped band of tipping paper that circumscribes the entire length of the filter and an adjacent portion of the wrapped tobacco rod. A conventional cigarette of this type is used by lighting the end opposite to the filter, and burning the tobacco rod. The smoker receives mainstream smoke into their mouth by drawing on the mouth end or filter end of the cigarette.

Combustion of organic material such as tobacco is known to produce tar and other potentially harmful byproducts. There have been proposed various smoking substitute devices in order to avoid the smoking of tobacco.

Such smoking substitute devices can form part of nicotine replacement therapies aimed at people who wish to stop smoking and overcome a dependence on nicotine.

Smoking substitute devices may comprise electronic systems that permit a user to simulate the act of smoking by producing an aerosol (also referred to as a "vapour") that is drawn into the lungs through the mouth (inhaled) and then exhaled. The inhaled aerosol typically bears nicotine and/or flavourings without, or with fewer of, the odour and health risks associated with traditional smoking.

In general, smoking substitute devices are intended to provide a substitute for the rituals of smoking, whilst providing the user with a similar experience and satisfaction to those experienced with traditional smoking and tobacco products. Some smoking substitute systems use smoking substitute articles (also referred to as a "consumables") that are designed to resemble a traditional cigarette and are cylindrical in form with a mouthpiece at one end.

The popularity and use of smoking substitute devices has grown rapidly in the past few years. Although originally marketed as an aid to assist habitual smokers wishing to quit tobacco smoking, consumers are increasingly viewing smoking substitute devices as desirable lifestyle accessories. Some smoking substitute devices are designed to resemble a traditional cigarette and are cylindrical in form with a mouthpiece at one end. Other smoking substitute devices do not generally resemble a cigarette (for example, the smoking substitute device may have a generally box-like form).

There are a number of different categories of smoking substitute devices, each utilising a different smoking substitute approach. A smoking substitute approach corresponds to the manner in which the substitute system operates for a user.

One approach for a smoking substitute device is the so-called "vaping" approach, in which a vapourisable liquid, typically referred to (and referred to herein) as "e-liquid", is heated by a heating device to produce an aerosol vapour which is inhaled by a user. An e-liquid typically includes a base liquid as well as nicotine and/or flavourings. The resulting vapour therefore typically contains nicotine and/or flavourings. The base liquid may include propylene glycol and/or vegetable glycerin.

A typical vaping smoking substitute device includes a mouthpiece, a power source (typically a battery), a tank for containing e-liquid, as well as a heating device. In use, electrical energy is supplied from the power source to the heating device, which heats the e-liquid to produce an aerosol (or "vapour") which is inhaled by a user through the mouthpiece.

Vaping smoking substitute devices can be configured in a variety of ways. For example, there are "closed system" vaping smoking substitute devices which typically have a sealed tank and heating element which is pre-filled with e-liquid and is not intended to be refilled by an end user. One subset of closed system vaping smoking substitute devices include a main body which includes the power source, wherein the main body is configured to be physically and electrically coupled to a consumable including the tank and the heating element. In this way, when the tank of a consumable has been emptied, the main body can be reused by connecting it to a new consumable. Another subset of closed system vaping smoking substitute devices are completely disposable, and intended for one-use only.

There are also "open system" vaping smoking substitute devices which typically have a tank that is configured to be refilled by a user, so the device can be used multiple times.

An example vaping smoking substitute device is the myblu™ e-cigarette. The myblu™ e-cigarette is a closed system device which includes a main body and a consumable. The main body and consumable are physically and electrically coupled together by pushing the consumable into the main body. The main body includes a rechargeable battery. The consumable includes a mouthpiece, a sealed tank which contains e-liquid, as well as a heating device, which for this device is a heating filament coiled around a portion of a wick which is partially immersed in the e-liquid. The device is activated when a microprocessor on board the main body detects a user inhaling through the mouthpiece. When the device is activated, electrical energy is supplied from the power source to the heating device, which heats e-liquid from the tank to produce a vapour which is inhaled by a user through the mouthpiece.

Another example vaping smoking substitute device is the blu PRO™ e-cigarette. The blu PRO™ e-cigarette is an open system device which includes a main body, a (refillable) tank, and a mouthpiece. The main body and tank are physically and electrically coupled together by screwing one to the other. The mouthpiece and refillable tank are physically coupled together by screwing one of the other, and detaching the mouthpiece from the refillable tank allows the tank to be refilled with e-liquid. The device is activated by a button on the main body. When the device is activated, electrical energy is supplied from the power source to a heating device, which heats e-liquid from the tank to produce a vapour which is inhaled by a user through the mouthpiece.

Another approach for a smoking substitute system is the so-called Heated Tobacco ("HT") approach in which tobacco (rather than an "e-liquid") is heated or warmed to release vapour. HT is also known as "heat not burn" ("HNB"). The tobacco may be leaf tobacco or reconstituted tobacco. The vapour may contain nicotine and/or flavourings. In the HT approach the intention is that the tobacco is heated but not burned, i.e. the tobacco does not undergo combustion.

A typical HT smoking substitute system may include a device and a consumable. The consumable may include the tobacco material. The device and consumable may be configured to be physically coupled together. In use, heat may be imparted to the tobacco material by a heating element of the device, wherein airflow through the tobacco material causes components in the tobacco material to be released as vapour. A vapour may also be formed from a carrier in the tobacco material (this carrier may for example include propylene glycol and/or vegetable glycerine) and additionally volatile compounds released from the tobacco. The released vapour may be entrained in the airflow drawn through the tobacco.

As the vapour passes through the consumable (entrained in the airflow) from the location of vaporisation to an outlet of the consumable (e.g. a mouthpiece), the vapour cools and condenses to form an aerosol for inhalation by the user. The aerosol will normally contain the volatile compounds.

In HT smoking substitute systems, heating as opposed to burning the tobacco material is believed to cause fewer, or smaller quantities, of the more harmful compounds ordinarily produced during smoking. Consequently, the HT approach may reduce the odour and/or health risks that can arise through the burning, combustion and pyrolytic degradation of tobacco.

There may be a need for improved design of smoking substitute systems, in particular HT smoking substitute systems, to enhance the user experience and improve the function of the HT smoking substitute system.

An example of the HT approach is the IQOS™ smoking substitute device from Philip Morris Ltd. The IQOS™ smoking substitute device uses a consumable, including reconstituted tobacco located in a wrapper. The consumable includes a holder incorporating a mouthpiece. The consumable may be inserted into a main body that includes a heating device. The heating device has a thermally conductive heating knife which penetrates the reconstituted tobacco of the consumable, when the consumable is inserted into the heating device. Activation of the heating device heats the heating element (in this case a heating knife), which, in turn, heats the tobacco in the consumable. The heating of the tobacco causes it to release nicotine vapour and flavourings which may be drawn through the mouthpiece by the user through inhalation.

A second example of the HT approach is the device known as "Glo"™ from British American Tobacco p.l.c. Glo™ comprises a relatively thin consumable. The consumable includes leaf tobacco which is heated by a heating device located in a main body. When the consumable is placed in the main body, the tobacco is surrounded by a heating element of the heating device. Activation of the heating device heats the heating element, which, in turn, heats the tobacco in the consumable. The heating of the tobacco causes it to release nicotine vapour and flavourings which may be drawn through the consumable by the user through inhalation. The tobacco, when heated by the heating device, is configured to produce vapour when heated rather than when burned (as in a smoking apparatus, e.g. a cigarette). The tobacco may contain high levels of aerosol formers (carrier), such as vegetable glycerine ("VG") or propylene glycol ("PG").

The present inventor(s) have observed that most smoking substitute devices currently on the market are configured to operate in isolation of other devices, which limits the functions the smoking substitute devices can perform.

The present inventor(s) have also observed that, as smoking substitute devices become more sophisticated and are able to perform more functions, they may require more sophisticated management. For example, that management may need to consider security and integrity factors for smoking substitute devices that are configured for data acquisition, storage and transmission. In particular, the management of wireless communication of data between smoking substitute devices and mobile devices requires secure and user-controllable management, to ensure accurate, efficient functioning and user peace of mind. In addition, the management of smoking substitute devices should consider the fact that a user may make use of several mobile devices at once and of the fact that a user is likely to periodically update the mobile devices which he or she uses. Any system for managing a smoking substitute device should be able to cope with the user's preferred mobile device(s) changing over time.

The present invention has been devised in light of the above considerations.

### Summary of the Invention

At its most general, the present invention provides a system, method and devices, which enable a smoking substitute device to be network-enabled (that is, to be capable of wireless communication with other devices) in a secure and user-controllable manner. The smoking substitute device can be network-enabled in the sense that it can communicate wirelessly, via a wireless network, with the communication terminal of a mobile phone or other device in order to transmit information such as, for example, component status information. Communication can be, for example, over a short-range network.

The user can control the transmission of data by initially forming a bonded communication link between their smoking substitute device and a first mobile (or "portable") device, for example the user's mobile phone. The user may subsequently use the first mobile device in order to grant wireless communication permissions to multiple additional mobile devices, each of which should be specifically user-selected. As a result of the permissions, and upon implementation of predetermined steps by the user and by the devices concerned, each of the multiple additional mobile devices will form individual bonded communication links to the smoking substitute device. A record or "whitelist" of the devices with which it is permitted to communicate can be stored in a suitable memory means, within the smoking substitute device.

The present invention recognises, and embodies the recognition, that the identity or identities of the mobile devices that a user will want to authorise, to wirelessly communicate with his or her smoking substitute device, is likely to change over time. For example, a user may periodically upgrade his or her mobile device. For example, it is typical for a user to upgrade his or her mobile phone or smartphone every 12 to 36 months. Some users may upgrade more frequently than that. In addition, particularly since technology is currently changing at a fast pace, it is common for users to acquire new mobile devices such as mobile phones, smart phones, laptop computers or tablet computers regularly, in order to keep up with technological advances. In addition, users may change their mobile devices if, for example, they change their place of work or they experience a change personal circumstances, for example moving out of a family home into a home of one's own or with a partner. There is also unfortunately a risk of a user's mobile device being lost, damaged or stolen, which may result in the user having to replace that mobile device with another one.

According to a first aspect of the invention, there may be provided a smoking substitute device comprising a memory which stores a whitelist configured to identify one or more devices with which the smoking substitute device is permitted to wirelessly communicate and a hardware component other than a button. The smoking substitute device is configured to operate in either a whitelist operating mode, in which the smoking substitute device is configured to advertise to only the one or more devices identified by the whitelist, or in an advertising operating mode, in which the smoking substitute device is configured to advertise to devices regardless of whether those devices are identified by the whitelist; The smoking substitute device is configured to, upon detection of a predetermined action that involves the hardware component, transition from operating in the whitelist operating mode to operating in the advertising operating mode.

In another aspect, a method is provided of managing a smoking substitute device, wherein the smoking substitute device comprises a memory which stores a whitelist configured to identify one or more devices with which the smoking substitute device is permitted to wirelessly communicate and a hardware component other than a button. The smoking substitute device is configured to operate in either a whitelist operating mode, in which the smoking substitute device is configured to advertise to only the one or more devices identified by the whitelist, or in an advertising operating mode, in which the smoking substitute device is configured to advertise to devices regardless of whether those devices are identified by the whitelist. The method comprises, when the smoking substitute device is operating in the whitelist operating mode, detecting a predetermined action that involves the hardware component, and transitioning from operating in the whitelist operating mode to operating in the advertising operating mode.

The method may further comprise clearing contents of the whitelist from the memory upon transitioning from the whitelist operating mode to the advertising operating mode control unit. This step may be carried out by the control unit of the smoking substitute device.

The smoking substitute device may default to operating in the whitelist operating mode, unless the whitelist is empty. After the smoking substitute device has transitioned from operating in the whitelist operating mode to operating in the advertising operating mode, the smoking substitute device may subsequently be configured to establish a bonded wireless communication link with a first mobile device.

The steps for establishing a bonded wireless communication link between the smoking substitute device and a mobile device should preferably include security measures such as the sharing of encryption keys, passwords or codes, to ensure that the smoking substitute device only forms bonded communication links with mobile devices that have been specifically identified and authorised by the user. For example, an application installed on a mobile device may configured to control the communications permissions for the smoking substitute device, in response to user input provided to the application, via a user interface of the mobile device. For example, the user input may comprise typing and/or making selections via a touch screen, keypad, control pad or other suitable input means. The user input may comprise voice commands. The user input may include using biometric data for identification.

The steps for establishing a bonded wireless communication link between the smoking substitute device and a mobile device may comprise any suitable combination of user-implemented, computer-implemented and hardware-implemented steps. For example, specific user input should be required in order to identify the first mobile device, with which the smoking substitute device may establish a bonded communication link. Moreover, specific user input should be required in order to identify any additional (i.e. second or subsequent) mobile devices, for which permission to communicate with the smoking substitute device is to be granted. However, some or all of the steps involved in establishing bonded communication links between the smoking substitute device and the mobile device(s), and the subsequent wireless transmissions between the devices, may happen without any specific user input being required. Moreover, the smoking substitute device may be configured such that the storing of data identifying the one or more devices with which the smoking substitute device is permitted to wirelessly communicate, on the whitelist, happens automatically, without any user input.

The one or more hardware components s of the smoking substitute device, other than a button, which are used to effect the method, may include a port for connecting a cable for charging the smoking substitute device and an accelerometer. The step of performing a predetermined action, in order to cause the smoking substitute device to transition from operating in the whitelist operating mode to operating in the advertising operating mode, may comprise performing an action which uses the port and/or an action that uses the accelerometer.

In either the first aspect and/or in the second aspect, each of the one or more devices identified by the whitelist may comprise a mobile device, for example, a mobile phone, a smart phone, a tablet computer or a laptop computer.

The so-called "whitelist" may comprise any suitable list, group or record that clearly identifies the permitted devices. The memory may include security means to ensure the whitelist is only accessible to the authorised user of the smoking substitute device, in case the smoking substitute device is lost, borrowed or stolen.

The one or more devices with which the smoking substitute device is permitted to wirelessly communicate, as identified by the whitelist, may each have a bonded wireless communication link with the smoking substitute device.

The whitelist may be configured to identify a finite predetermined maximum number of devices, with which the smoking substitute device is permitted to communicate. For example, the predetermined maximum number of devices may be 10 or fewer. For example, the predetermined maximum number of devices may be 8 or fewer.

The so-called "whitelist operating mode" may be regarded as an operational mode in which the smoking substitute device is operable to issue advertising wireless communications only to the one or more devices identified by the whitelist. The communications may be issued via a wireless interface of the smoking substitute device and received by a wireless interface of a device identified on the whitelist. For example, the devices may have Bluetooth™ interfaces. However other wireless communication networks may be used such as a cellular network (e.g. according to a standard protocol, such as 3G or 4G) or a WiFi network. In terms of the wireless communication, the smoking substitute device may be regarded as being a "peripheral device" and a mobile device, such as any of those identified on the whitelist, can be regarded as being a "host device".

When the smoking substitute is in whitelist operating mode, it may be "invisible" to other mobile devices, which are not identified on the whitelist, within the relevant communication network. For example, this may be because its advertising messages are specifically addressed only to the devices on the whitelist. In such an embodiment, other mobile devices may not attempt to communicate with the smoking substitute device when it is in whitelist operating mode, because it has become "invisible" to those other mobile devices.

Alternatively, the smoking substitute device may remain "visible" to other mobile devices, which are not identified on the whitelist, when it is in whitelist operating mode. However, it will not specifically address any advertising communications to those other mobile devices, whilst it remains in whitelist operating mode. It may be configured not to receive any wireless communications from other mobile devices, which are not identified on the whitelist, when it is in whitelist operating mode. Alternatively, it may be that the other mobile devices can still send wireless communication attempts to the smoking substitute device, whilst it is in whitelist operating mode, but that it is configured to block or ignore any communication attempts from those other mobile devices unless and until they are identified on the whitelist, or until the smoking substitute device transitions to operating in the "advertising operating mode".

The so-called "advertising operating mode" may be regarded as an operational mode in which the smoking substitute device is operable to issue advertising wireless communications to devices regardless of whether those devices are identified by the whitelist. Again, the communications may be issued and received via suitable wireless interfaces and may be issued using Bluetooth™ or any other suitable communication network. When it is in "advertising operating mode" the smoking substitute device should be "visible" to a plurality of devices, within its wireless communication range, including devices that are identified on the whitelist (if the whitelist is not empty) and devices that are not identified on the whitelist. The smoking substitute device may also be able to receive communication attempts from each of the plurality of devices when it is in advertising operating mode.

The transition from operating in the whitelist operating mode to operating in the advertising operating mode may cause the whitelist to change. For example, it may cause the identities of one or more of the devices that were, before the transition, on the whitelist to be deleted. For example, it may cause the whitelist and/or the memory on which the whitelist is stored, to be "reset". For example, any data that is deleted or reset as a result of the smoking substitute device transitioning from operating in the whitelist operating mode to operating in the advertising operating mode may be stored in an archive memory, either within the smoking substitute device itself and/or within an external memory, such as within an application that is used on a mobile device to control communication with the smoking substitute device. For example, the application may require a user to have an ID and possibly a password, to access the application, and the application may store archive whitelist information associated with an individual user ID.

Although the smoking substitute device is configured both to operate in the whitelist operating mode and to operate in the advertising operating mode, it should be configured so that it is selectively operable in either the whitelist operating mode or in the advertising operating mode. It should not simultaneously operate in both modes. However, this does not preclude devices that are (or were) identified on the whitelist from seeing or receiving wireless communications from the smoking substitute device when it is in advertising operating mode. There may be other operating modes, for example there may be restrictions imposed in relation to wireless communication when the smoking substitute device is running at low power (i.e. at low battery charge level). Any such other operating modes are not discussed in detail herein.

The smoking substitute device may be "bonded" to each of the devices identified on the whitelist, when the device is in whitelist operating mode. Bonding of the smoking substitute device to a mobile device may comprise any steps. For example, it may comprise the sharing of an encryption key, a password or a code between the two devices. The smoking substitute device may initially be paired to the first mobile device, for example through the exchange of encryption keys, and thereafter it may be bonded to the first mobile device by virtue of the devices storing and remembering the exchanged encryption keys, and reusing those keys each time the devices connect to one another. Alternatively, or additionally, bonding may comprise the user inputting data to identify the smoking substitute device to an application installed on the mobile device. When there is already a first mobile device identified on the whitelist, bonded to the smoking substitute device, the identification of any additional (i.e. second or subsequent) mobile devices on the whitelist, and the bonding of those mobile devices to the smoking substitute device, may be user-controlled using inputs made via the first mobile device.

The smoking device may be configured to automatically connect to any device identified by the whitelist. Therefore, when the user chooses to use a particular mobile device from the whitelist, to connect to the smoking substitute device, the user would not have to go through a pairing or bonding process again, for that mobile device.

The term "other than a button" should be regarded as meaning "instead of or in addition to a button". Therefore, the smoking substitute device may or may not have a button. A so-called "button" may be understood to comprise a mechanical actuator - usually a depressible actuator - which can usually be used to switch the device on and/or off. If a smoking substitute device has no button, it may be activated by, for example, an airflow sensor which detects a user inhale action and prompts activation of the device in response to detecting an inhale action. If a smoking substitute device has no button, it may be deactivated by a timer - for example, it may be configured to switch off after a predetermined period of inactivity (e.g. of no inhales being detected). Alternatively, it may remain switched on unless and until it runs out of power, or until its remaining power reaches a predetermined low level.

The hardware component, other than a button, may include a port for connecting a cable for charging the smoking substitute device. A predetermined action, to transition the smoking substitute device from operating in the whitelist operating mode to operating in the advertising operating mode, may be a predetermined action that uses the port. For example, it may be (or it may include) connecting a cable for charging the smoking substitute device to the port.

It may not be necessary to electrically connect the other end of the cable (opposite the end that connects to the port) to a power supply such as an electrical socket, in order to complete the predetermined action that uses the port, in order to (or as part of a number of actions that combine to) effect the transition of the smoking substitute device from operating in the whitelist advertising mode to operating in the advertising operating mode. For example, the mechanical insertion of an end of the cable into the port may be sufficient to complete a predetermined action that uses the port. That is, the device may include a sensor that is configured to sense when the end of the cable has been inserted - for example, because of the mechanical connection that it forms with the receiving part of the charging port - and to notify the control unit, when the insertion has occurred. Preferably there should be a requirement in such an embodiment for a particular mechanical connection to have been formed - to avoid a user being able to insert something other than the correct charging cable into the port, in order to effect the transition of the device form operating in whitelist operating mode to operating in advertising operating mode.

The hardware component, other than a button, may include an accelerometer. A predetermined action, to transition the smoking substitute device from operating in the whitelist operating mode to operating in the advertising operating mode, may be a predetermined action that uses the accelerometer. For example, it may be (or it may include) performing one or more predetermined movements with the smoking substitute device to be detected by the accelerometer. For example, the one or more predetermined movements may include a tapping movement such as tapping the smoking substitute device against a surface.

The smoking substitute device may include at least two hardware components, other than a button. Multiple predetermined actions may have to be performed, using the at least two hardware mechanisms, in order to effect the transition of the smoking substitute device from operating in the whitelist operating mode to operating in the advertising operating mode. For example, both a port and an accelerometer may be included and, in order to effect the transition, the user may have to connect a cable for charging the smoking substitute device to the port and perform one or more predetermined movements with the smoking substitute device such as a tapping movement, for example tapping the smoking substitute device against a surface, to be detected by the accelerometer.

It may be necessary for the predetermined movements with the smoking substitute device, which are to be detected by the accelerometer, to meet particular criteria in order to prevent accidental transitioning of the smoking substitute device from operating in the whitelist operating mode to operating in the advertising operating mode. For example, the movements may have to be made with a predetermined force and/or have a predetermined magnitude and/or speed and or frequency and/or pattern. The predetermined movements required for effecting the transition should preferably be distinguishable from possible accidental movements which can occur, for example, when the device is accidentally dropped. The predetermined movements should also be distinguishable from typical movement that the device would encounter during use and from typical movement that would occur, for example, if the device was being moved or transported whilst it is stored in a user's pocket or bag. Moreover, creating a requirement for a charging cable to be inserted into the port in addition to the predetermined movements being detected, in order for the transition to be effected, reduces the risk of the transition happening accidentally since the user is less likely to transport the device, with the cable attached, as part of his or her normal day-to-day routine.

In another aspect, a system is provided comprising a smoking substitute device and a first mobile device, wherein the smoking substitute device is not, at first, configured to wirelessly communicate with the first mobile device. The smoking substitute device comprises a memory which stores a whitelist configured to identify one or more devices, with which the smoking substitute device is permitted to wirelessly communicate and one or more hardware components, other than a button. The smoking substitute device is configured to operate in a whitelist operating mode in which the smoking substitute device is configured to advertise to only the one or more devices identified by the whitelist, and therefore not to advertise to the first mobile device. The smoking substitute device is configured to operate in an advertising operating mode in which the smoking substitute device is configured to advertise to devices regardless of whether those devices are identified by the whitelist, and therefore to advertise to the first mobile device. The smoking substitute device is configured to upon detection of a predetermined action that involves the hardware component, transition from operating in the whitelist operating mode to operating in the advertising operating mode.

The smoking substitute device may be further configured so that, after it has transitioned from operating in the whitelist operating mode to operating in the advertising operating mode, it can be configured to wirelessly communicate with the first mobile device. It may form a bonded wireless communication link with the first mobile device. This does not have to happen, and certainly does not have to happen immediately after the transition to advertising operating mode occurs. There may be times or circumstances in which a user wishes to keep his or her smoking substitute device in advertising operating mode - for example, if the user wanted to sell or give away his or her smoking substitute device, it is likely that he or she would wish to effectively "reset" the device, erasing any stored data which previously limited the mobile devices to which it could communicate, and keep it open for the next user to decide how to manage communications of the smoking substitute device with one or more mobile devices.

If he or she wishes to take them, any suitable series of steps may be taken, by the user, in order to identify the first mobile device to the smoking substitute device - for example, the user may provide inputs to an application that is installed on the first mobile device, via one or more user interfaces of the first mobile device. Any suitable protocol, which may include security steps to prevent misuse by a non-authorised user, may be followed in order to establish a wireless communication link between the smoking substitute device and the first mobile device.

An application may have to be installed on the first mobile device in order to enable it to wirelessly communicate certain data and/or instructions to the smoking substitute device. However, the first mobile device should be operable to create a paired or bonded wireless communication link to the smoking substitute device, without having the application installed on the first mobile device.

If the smoking substitute device does become configured to wirelessly communicate with the first mobile device, the first mobile device will consequently be identified in the whitelist.

If it does become identified on the whitelist, and if it is the first device to become listed on the whitelist, after the transition to advertising operating mode occurs, the first mobile device may be configured to enable the user to add additional mobile devices to the whitelist. Thereafter, the smoking substitute device may be configured to form a bonded communication link to each of the devices that is identified on the whitelist.

Once the smoking substitute device has been configured to wirelessly communicate with the first mobile device, the smoking substitute will transition back to operating in the whitelist operating mode.

The invention includes the combination of the aspects and preferred features described except where such a combination is clearly impermissible or expressly avoided.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Summary of the Figures

Embodiments and experiments illustrating the principles of the invention will now be discussed with reference to the accompanying figures in which:
**Figure 1** shows an example system for managing a smoking substitute device.
**Figure 2(a)** shows an example smoking substitute device for use as the smoking substitute device in the system of Fig. 1.
**Figure 2(b)** shows the main body of the smoking substitute device of Fig. 2(a) without the consumable.
**Figure 2(c)** shows the consumable of the smoking substitute device of Fig. 2(a) without the main body.
**Figure** 3(a) is a schematic view of the main body of the smoking substitute device of Fig. 2(a).
**Figure 3(b)** is a schematic view of the consumable of the smoking substitute device of Fig. 2(a).
**Figure 4** is a flowchart of a method for controlling bi-directional communication between a smoking substitute device and a plurality of mobile devices.
**Figure 5** is a flowchart of a method for resetting a whitelist in a smoking substitute device that is an embodiment of the invention.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

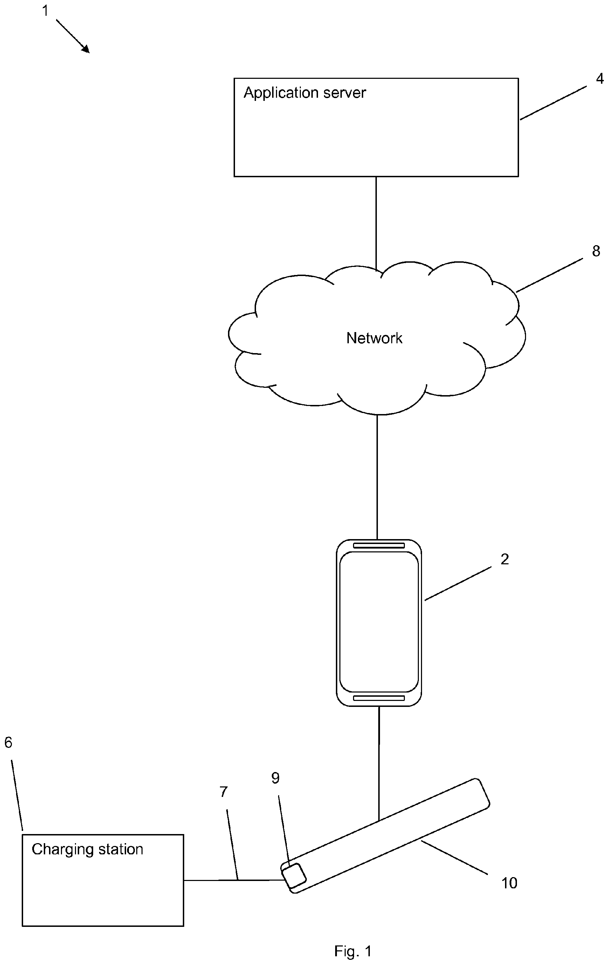

Fig. 1 shows an example system 1 for managing a smoking substitute device 10.

The system 1 as shown in Fig. 1 includes a mobile device 2, an application server 4, an optional charging station 6, as well as the smoking substitute device 10.

The smoking substitute device 10 is configured to communicate wirelessly, e.g. via Bluetooth™, with an application (or "app") installed on the mobile device 2, e.g. via a suitable wireless interface (not shown) on the mobile device 2. The mobile device 2 may be a mobile phone, for example. The application on the mobile phone is configured to communicate with the application server 4, via a network 8. The application server 4 may utilise cloud storage, for example.

The network 8 may include a cellular network and/or the internet.

A skilled person would readily appreciate that the mobile device 2 may be configured to communicate via the network 8 according to various communication channels, preferably a wireless communication channel such as via a cellular network (e.g. according to a standard protocol, such as 3G or 4G) or via a WiFi network.

The app installed on the mobile device and the application server 4 may be configured to assist a user with their smoking substitute device 10, based on information communicated between the smoking substitute device 10 and the app and/or information communicated between the app and the application server 4.

The charging station 6 (if present) may be configured to charge (and optionally communicate with) the smoking substitute device 10, via a charging port 9 on the smoking substitute device 10. The charging port on the smoking substitute device 10 may be a USB port, for example, which may allow the smoking substitute device to be charged by any USB-compatible device capable of delivering power to the smoking substitute device 10 via a suitable USB cable 7 (in this case the USB-compatible device would be acting as the charging station 6). Alternatively, the charging station could be a docking station specifically configured to dock with the smoking substitute device 10 and charge the smoking substitute device 10 via the charging port 9 on the smoking substitute device 10.

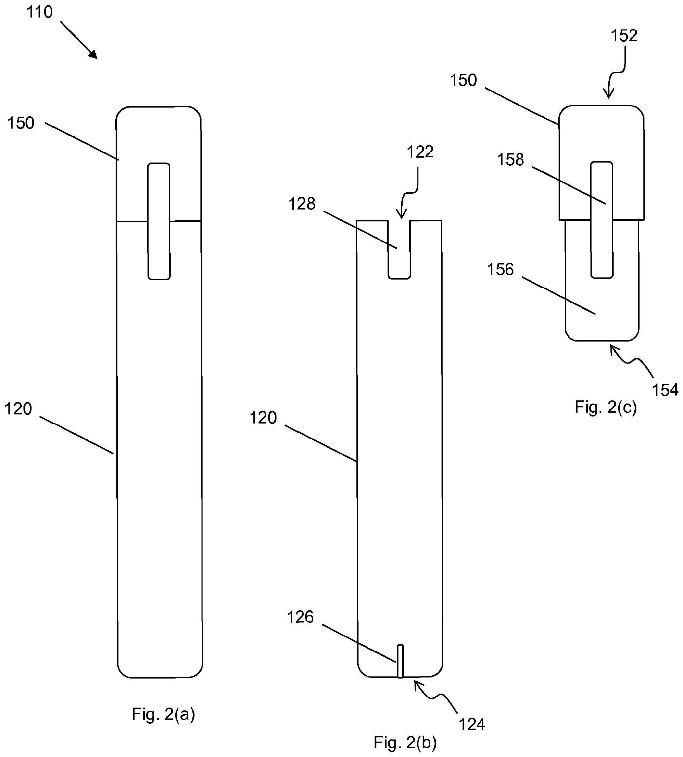

Fig. 2(a) shows an example smoking substitute device 110 for use as the smoking substitute device 10 in the system 1 of Fig. 1.

In this example, the smoking substitute device 110 includes a main body 120 and a consumable 150. The consumable 150 may alternatively be referred to as a "pod".

In this example, the smoking substitute device 110 is a closed system vaping device, wherein the consumable 150 includes a sealed tank 156 and is intended for one-use only.

Fig. 2(a) shows the smoking substitute device 110 with the main body 120 physically coupled to the consumable 150.

Fig. 2(b) shows the main body 120 of the smoking substitute device 110 without the consumable 150.

Fig. 2(c) shows the consumable 150 of the smoking substitute device 110 without the main body 120.

The main body 120 and the consumable 150 are configured to be physically coupled together, in this example by pushing the consumable 150 into an aperture in a top end 122 of the main body 120, e.g. with the consumable 150 being retained in the aperture via an interference fit. In other examples, the main body 120 and the consumable could be physically coupled together by screwing one onto the other, through a bayonet fitting, or through a snap engagement mechanism, for example. An optional light 126, e.g. an LED located behind a small translucent cover, is located a bottom end 124 of the main body 120. The light 126 may be configured to illuminate when the smoking substitute device 110 is activated.

The consumable 150 includes a mouthpiece (not shown) at a top end 152 of the consumable 150, as well as one or more air inlets (not shown in Fig. 2) so that air can be drawn into the smoking substitute device 110 when a user inhales through the mouthpiece. At a bottom end 154 of the consumable 150, there is located a tank 156 that contains e-liquid. The tank 156 may be a translucent body, for example.

The tank 156 preferably includes a window 158, so that the amount of e-liquid in the tank 156 can be visually assessed. The main body 120 includes a slot 128 so that the window 158 of the consumable 150 can be seen whilst the rest of the tank 156 is obscured from view when the consumable 150 is inserted into the aperture in the top end 122 of the main body 120.

In this present embodiment, the consumable 302 is a "single-use" consumable. That is, upon exhausting the e-liquid in the tank 156, the intention is that the user disposes of the whole consumable 150. In other embodiments, the e-liquid (i.e. aerosol former) may be the only part of the system that is truly "single-use". In such embodiments, the tank 156 may be refillable with e-liquid or the e-liquid may be stored in a non-consumable component of the system. For example, the e-liquid may be stored in a tank located in the device or stored in another component that is itself not single-use (e.g. a refillable tank).

The tank 156 may be referred to as a "clearomizer" if it includes a window 158, or a "cartomizer" if it does not.

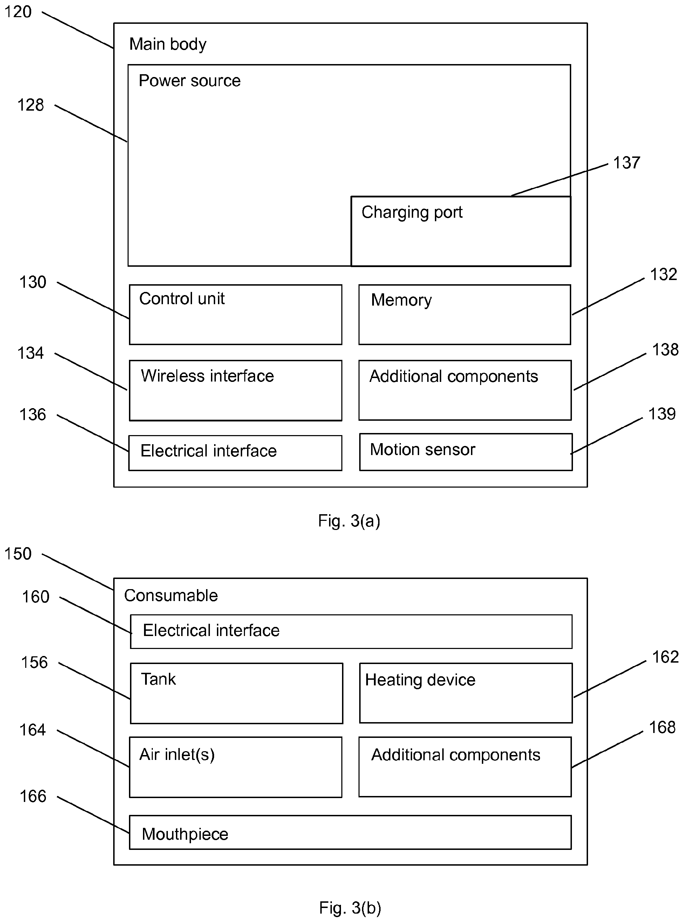

Fig. 3(a) is a schematic view of the main body 120 of the smoking substitute device 110.

Fig. 3(b) is a schematic view of the consumable 150 of the smoking substitute device 110.

As shown in Fig. 3(a), the main body 120 includes a power source 128, a control unit 130, a memory 132, a wireless interface 134, an electrical interface 136, and, optionally, one or more additional components 138.

The power source 128 is preferably a battery, more preferably a rechargeable battery.

The control unit 130 may include a microprocessor, for example.

The memory 132 is preferably includes non-volatile memory.

The wireless interface 134 is preferably configured to communicate wirelessly with the mobile device 2, e.g. via Bluetooth. To this end, the wireless interface 134 could include a Bluetooth™ antenna. Other wireless communication interfaces, e.g. WiFi, are also possible.

The electrical interface 136 of the main body 120 may include one or more electrical contacts. The electrical interface 136 may be located in, and preferably at the bottom of, the aperture in the top end 122 of the main body 120. When the main body 120 is physically coupled to the consumable 150, the electrical interface 136 may be configured to pass electrical power from the power source 128 to (e.g. a heating device of) the consumable 150 when the smoking substitute device 110 is activated, e.g. via the electrical interface 160 of the consumable 150 (discussed below). When the main body 120 is not physically coupled to the consumable 150, the electrical interface may be configured to receive power from the charging station 6.

The additional components 138 of the main body 120 may include the optional light 126 discussed above.

The additional components 138 of the main body 120 may, if the power source 128 is a rechargeable battery, include a charging port 137 configured to receive power from the charging station 6. This may be located at the bottom end 124 of the main body 120. Alternatively, the electrical interface 136 discussed above is configured to act as a charging port configured to receive power from the charging station 6 such that a separate charging port is not required.

The additional components 138 of the main body 120 may, if the power source 128 is a rechargeable battery, include a battery charging control circuit, for controlling the charging of the rechargeable battery. However, a battery charging control circuit could equally be located in the charging station 6 (if present).

The additional components 138 of the main body 120 may include an airflow sensor for detecting airflow in the smoking substitute device 110, e.g. caused by a user inhaling through a mouthpiece 166 (discussed below) of the smoking substitute device 110. The smoking substitute device 110 may be configured to be activated when airflow is detected by the airflow sensor. This optional sensor could alternatively be included in the consumable 150 (though this is less preferred where the consumable 150 is intended to be disposed of after use, as in this example).

The additional components 138 of the main body 120 may include an actuator, e.g. a button. The smoking substitute device 110 may be configured to be activated when the actuator is actuated. This provides an alternative to the airflow sensor noted, as a mechanism for activating the smoking substitute device 110.

The additional components 138 of the main body 120 may include a reader configured to read information associated with the consumable from a machine readable data source included in (e.g. contained in the body of, or attached to) the consumable 150.

The reader may be configured to read information from the machine readable data source wirelessly, e.g. via electromagnetic waves or optically. Thus, for example, the machine readable data source included in the consumable 150 could be an RFID tag (in which case the reader included in the main body 120 may be an RFID reader) or a visual data source such as a barcode (in which case the reader included in the main body may be an optical reader, e.g. a barcode scanner). Various wireless technologies and protocols may be employed to allow the reader to wirelessly read information from a machine readable data source included in or attached to the consumable 150, e.g. NFC, Bluetooth, Wi-Fi, as would be appreciated by a skilled person.

For avoidance of any doubt, the reader (if present) may be configured to read information from the machine readable data source non-wirelessly, e.g. using a direct electrical connection between the main body 120 and consumable 150.

In some embodiments discussed herein, the main body 120 includes a motion sensor 139, such as an accelerometer. The motion sensor 139 is arranged to detect movement of the main body 120 and send a signal indicative of movement to the control unit 130. The control unit 130 may be configured to monitor signals from the motion sensor 139 and take action upon detection of one or more predetermined trigger signals, as discussed in more detail below.

As shown in Fig. 3(b), the consumable 150 includes the tank 156, an electrical interface 160, a heating device 162, one or more air inlets 164, a mouthpiece 166, and, optionally, one or more additional components 168.

The electrical interface 160 of the consumable 150 may include one or more electrical contacts. The electrical interface 136 of the main body 120 and an electrical interface 160 of the consumable 150 are preferably configured to contact each other and therefore electrically couple the main body 120 to the consumable 150 when the main body 120 is physically coupled to the consumable 150. In this way, electrical energy (e.g. in the form of an electrical current) is able to be supplied from the power source 128 in the main body 120 to the heating device 162 in the consumable 150.

The heating device 162 is preferably configured to heat e-liquid contained in the tank 156, e.g. using electrical energy supplied from the power source 128. In one example, the heating device 162 may include a heating filament and a wick, wherein a first portion of the wick extends into the tank 156 in order to draw e-liquid out from the tank 156, and wherein the heating filament coils around a second portion of the wick located outside the tank 156. In this example, the heating filament is configured to heat up e-liquid drawn out of the tank 156 by the wick to produce an aerosol vapour.

The one or more air inlets 164 are preferably configured to allow air to be drawn into the smoking substitute device 110, when a user inhales through the mouthpiece 166.

The additional components 168 of the consumable 150 may include a machine readable data source, which may e.g. be contained in the body of, or attached to the consumable 150. The machine readable data source may store information associated with the consumable. The information associated with the consumable may include information concerning the content of the consumable (e.g. e-liquid type, batch number) and/or a unique identifier, for example.

The machine readable data source may be rewritable, e.g. a rewritable RFID chip, or read only, e.g. a visual data source such as a barcode. As indicated above, the additional components 138 of the main body 120 may include a reader configured to read information associated with the consumable from the machine readable data source.

In use, a user activates the smoking substitute device 110, e.g. through actuating an actuator included in the main body 120 or by inhaling through the mouthpiece 166 as described above. Upon activation, the control unit 130 may supply electrical energy from the power source 128 to the heating device 162 (via electrical interfaces 136, 166), which may cause the heating device 162 to heat e-liquid drawn from the tank 156 to produce a vapour which is inhaled by a user through the mouthpiece 166.

Of course, a skilled reader would readily appreciate that the smoking substitute device 110 shown in Figs. 2 and 3 shows just one example implementation of a smoking substitute device, and that other forms of smoking substitute device could be used as the smoking substitute device 10 of Fig. 1.

By way of example, a HNB smoking substitute device including a main body and a consumable could be used as the smoking substitute device 10 of Fig. 1, instead of the smoking substitute device 110. One such HNB smoking substitute device is the IQOS™ smoking substitute device discussed above.

As another example, an open system vaping device which includes a main body, a refillable tank, and a mouthpiece could be used as the smoking substitute device 10 of Fig. 1, instead of the smoking substitute device 110. One such open system vaping device is the blu PRO™ e-cigarette discussed above.

As another example, an entirely disposable (one use) smoking substitute device could be used as the smoking substitute device 10 of Fig. 1, instead of the smoking substitute device 110.

Embodiments of the present invention relate to the configuration and use of a network-enabled smoking substitute device such as that discussed above in relation to Fig. 1. In particular, they relate to providing secure, reliable and user-controllable communication links between a smoking substitute device and one or more mobile devices, for example mobile phones, smartphones, laptop computers or tablet computers, in accordance with user commands. They further relate to deleting and/or resetting a user's preferences in relation to communication links between his or her smoking substitute device and one or more mobile devices, if required, in a secure, reliable and user-controllable manner.

As described in more detail below, by providing a whitelist (or other user-authorised record) of permitted mobile devices with which the user's smoking substitute device can wirelessly communicate, the risk of the user's data being accessible via a non-authorised mobile device is reduced. Such a risk might otherwise exist if, for example, his or her smoking substitute device is lost, borrowed or stolen, or if the user is in a busy area with lots of mobile devices (with wireless communication interfaces) present.

The described system, method and devices enable a smoking substitute device to form bonded wireless communication links to one or more mobile devices. This removes any requirement for the smoking substitute device to repeatedly "advertise to", or look for, an unnecessarily large plurality of mobile devices, when it is seeking to transfer data to, or otherwise communicate with, one or more particular user-selected mobile devices. This improves efficiency and reduces load on the battery, hence extending battery life. However, the user is not limited to his or her smoking substitute device communicating with just one mobile device. It is common for users to own more than one mobile device - such as a tablet or laptop computer in addition to a mobile phone and/or separate mobile phones for personal and professional purposes respectively. It could therefore be unduly restrictive if a smoking substitute device was only configured to communicate with a single mobile device.

The above notwithstanding; the system, method and devices described herein also embody the recognition that there may be circumstances which cause a user to no longer want his or her smoking substitute device to be limited to communication with only the device(s) identified in the whitelist. For example, if a user owns or uses a lot of mobile devices, and/or if he or she changes those devices regularly, the whitelist (which may be deliberately limited to a small number of devices) may become full. Moreover, it may include one or more mobile devices that the user no longer owns or uses, hence making their inclusion on the whitelist redundant. If the user continues to own/use one of the mobile devices on the whitelist - in particular, the first mobile device to be listed, which may act as a "master controller" for adding or removing others from the whitelist - then the user may have an option of removing devices from the whitelist, via the application installed on the first mobile device (or possibly via accessing the application on another of the mobile devices on the whitelist). However, if the user no longer has access to the mobile devices on the whitelist (in particular if they no longer have access to the first "master controller" mobile device) because, for example, those devices have been lost or stolen or because they no longer function correctly, the user may require an alternative method for resetting the whitelist. The user may also require an alternative method for resetting the whitelist if, perhaps, there is a problem with accessing the application, for example if the user cannot remember his or her password or code for accessing the application on a mobile device.

As detailed further below, there is a system, method and device described herein that enables the user to reset his or her smoking substitute device, and to open up communications to mobile devices beyond those previously listed on the whitelist, by using the hardware of the smoking substitute device. This can be done in a user-controlled manner, preferably by using a combination of movements or other actions in relation to two or more hardware components (or "hardware mechanisms") of the smoking substitute device, and preferably wherein those movements or other actions comprise a non-routine set of steps, that the user is unlikely to carry out accidentally, and which a non-authorised user would struggle to guess.

Before the method for resetting the whitelist of a smoking substitute device using hardware means is described, a method for using an application and/or a mobile device in order to populate the whitelist, and to establish wireless communication links between a smoking substitute device and one or more mobile devices, will first be described.

As described above in relation to Fig. 1, it is known for a smoking substitute device to communicate with a mobile device and with an application running on a mobile device. To implement such communication, a wireless connection is established between the smoking substitute device and a mobile device. The wireless connection may be via any suitable wireless protocol that permits transmission of information. For example, the smoking substitute device may pair with the mobile device using a short range transmission protocol such as Bluetooth™ or the like. The smoking substitute device may be wirelessly connectable to a mobile device via any suitable personal area network.

The type of data that a smoking substitute device will communicate to a mobile device (including to an application running on a mobile device) may vary based on the particular type, nature, make and model of the smoking substitute device and/or on the particulars of the mobile device and/or of the particulars of the application running on that mobile device. However, almost invariably, the data being communicated to the mobile device will be particular to that individual smoking substitute device and will often be particular to its user, including, for example, the user's preferences, usage habits such as number of inhales and possibly also user personal or contact information. Similarly, the type of data communicated from a mobile device to a smoking substitute device may be bespoke to that smoking substitute device.

For example, a smoking substitute device may be configured to log component status data, for example data regarding the level of battery charge and/or data concerning the operational characteristics of the heating device and/or data read from a consumable such as the brand, type or flavouring of the current consumable and/or its current tank fill level. According to an embodiment, the smoking substitute device may transmit some or all of the logged component status data to a mobile device and, in response, the mobile device may be configured to issue instructions, warnings or commands to the smoking substitute device. For example, a mobile device may be configured to determine battery charge level, based on received component status data, and to warn the user if recharge is required. Similarly, the mobile device

(or an application running on that mobile device) may be configured to assess operational parameters of certain components such as the heating device, on a repeated basis and preferably on a regular basis, and to issue a warning or other notification to the user via the smoking substitute device if any anomalies in those operational parameters are detected. Thus it can be seen that the data communicated between a smoking substitute device and a mobile device may be time-critical and/or it may be critical for the data to be safely received only by the intended recipient device(s), in order to ensure successful technical operation of the smoking substitute device, and to provide user satisfaction and peace of mind.

The present inventor(s) have recognised that it can be important for the communications between a smoking substitute device and a mobile device to be secure and reliable, so that all of the correct information is transmitted between the smoking substitute device and a user-selected mobile device and to ensure that none of that information is lost or is transmitted to a non-authorised device.

The present inventor(s) have further recognised that a user may wish to link more than one mobile device to his or her smoking substitute device, in order to offer user flexibility and to reflect the fact that users commonly now own/use more than one mobile device in their day-to-day lives. However, the inventor(s) have recognised the necessity for the number of mobile devices which communicate with an individual smoking substitute device to be limited and to be controllable by the user.

The present inventor(s) have further recognised that a user may wish to delete some or all of the wireless communication links that have previously been established for his or her smoking substitute device. In particular, it has been recognised that a solution may be required if one or more of the previously-accessible mobile devices, and/or the application which was used on one or more of those mobile devices to establish wireless communication links with the smoking substitute device, becomes inaccessible to the user.

In view of the above, a system is provided herein for managing the wireless communications between a smoking substitute device and two or more mobile devices. A bonded communication link may be established between the smoking substitute device and a first, user-selected, mobile device. In order to form a bonded communication link, the two devices must exchange suitable authorisation data, to each securely identify themselves to the respective other. The authorisation data may comprise, for example, an encryption key, a password or a code. An application may be installed on the first mobile device, wherein the application has access to the smoking substitute device, via the bonded communications link. The application may be used to control communication between the smoking substitute device and any other mobile devices.

The smoking substitute device is configured, after the initial bonding to the first mobile device, to avoid communicating with a second mobile device (or to any other mobile device that is not bonded to the smoking substitute device) unless the application installed on the first mobile device permits the smoking substitute device to communicate with the second mobile device.

An example embodiment will now be described in which a Bluetooth™ connection is employed for communications between a smoking substitute device and a mobile device. However other types of connection are possible, as described above in relation to Fig. 1, and the operational considerations for Bluetooth™ communication will be relevant to other connection types.

The smoking substitute device in the following example embodiment is of the type described above in relation to Figs. 1 and 3(a), which can form a wireless connection to a device running an application, such a mobile phone, smart phone, tablet or laptop computer. At the beginning of the method, it is to be taken that the smoking substitute device does not yet have any communication bonded communication links to any specific mobile devices.

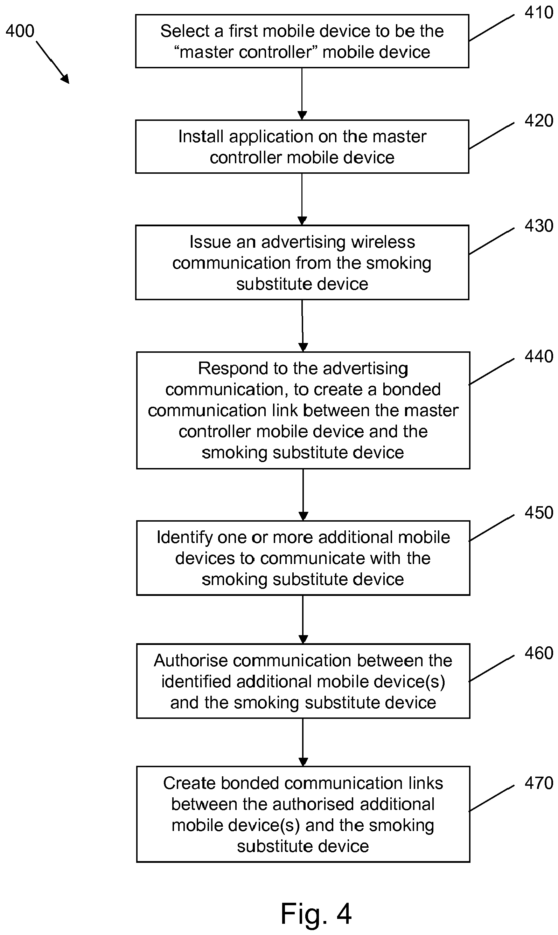

Referring to Fig. 4, at the initial step 410 of the method 400, the user of the smoking substitute device selects a first mobile device, which he or she wishes to use as a "master controller" for controlling and limiting the identity and number of the mobile devices, which can communicate with his or her smoking substitute device. For the purpose of the described method, it is to be taken that the user has the requisite authority and/or permissions, to implement this method on his or her chosen devices.

At the second step 420 of the method 400, the user installs an application on the "master controller" mobile device, for controlling communications with the smoking substitute device. The process of installing (or "downloading") applications onto mobile devices is well known and will not be described further herein. It is noted that, in almost all cases, there will be at least one security step involved in installing an application onto a mobile device. For example, the user may have to input a password and/or use his or her biometric data such as a fingerprint or thumbprint to show that he or she has the authority and/or permissions to install the application onto the mobile device.

Although step 420 is shown and described as being the second step of the specific method 400 described herein, it may be performed either before or after step 430, detailed below. The bonding described below for step 430 can be performed without the application yet being installed on the first mobile device.

At the next step 430 of the method 400, the user establishes a wireless communication link between the smoking substitute device and the "master controller" first mobile device. At this point, because there are no established bonds between it and any particular mobile devices, and because it is seeking to establish a communication link rather than seeking to transfer data as yet, the wireless interface (such as the Bluetooth™ antenna) of the smoking substitute device will be operating in a so-called "advertising" mode. It is known for so-called "peripheral" wireless devices, such as a smoking substitute device, which interface with so-called "host" wireless devices, such as a mobile device, to operate in an advertising operating mode, in order to broadcast information defining their intentions. In this case, the intention of the smoking substitute device is to establish a two-way connection with a host device - i.e. the user's mobile device, on which the relevant application is running.

In order to prompt his or her smoking substitute device to begin operating in an advertising operating mode, the user may take any suitable steps, depending on the particulars of the device. For example, there may be a button or other actuator for switching on the Bluetooth™ capabilities of the device. The device may default to being in an advertising operating mode, when its Bluetooth™ capabilities are switched on, in the absence of any bonded communication links already being in place. For example, there may be a predetermined period of time, after the device is switched on (or Bluetooth™ capabilities are switched on), during which the smoking substitute device will operate in an advertising operating mode. For example, there may be a predetermined period of time after the user performs a certain predetermined input or action, such as shaking or tapping the device, during which it will operate in an advertising operating mode.

Because the smoking substitute device does not yet have an established bond with any particular mobile device, the advertisement message sent out by the smoking substitute device at step 430 will be a general advertisement message, which is receivable by any host device or potential host device within the wireless communication range of the smoking substitute device, at that time.

The manner in which a wireless interface of a peripheral device, such as a Bluetooth™ antenna, issues advertisement messages is well known and so will not be described in detail herein. In general terms, the user may have to provide an input to the smoking substitute device to activate its Bluetooth™ capabilities, in order for it to be 'found' by the user's mobile device. Or this may happen automatically.

Once the Bluetooth™ advertisement message has been sent by the smoking substitute device, the next step 440 is for the master controller mobile device to issue a response, or series of responses, which results in a wireless communication link being formed between the smoking substitute device and the mobile device.

For example, the advertising message issued by the smoking substitute device may include instructions for a mobile device on what it expects or demands in a response from a mobile device, in order for it to connect to the smoking substitute device. The user should ensure that the first mobile device, which he or she wishes to use as the master controller, has its Bluetooth™ capabilities switched on, so that it can scan for and receive the advertising message from the smoking substitute device. Once the advertising message has been received by the first mobile device, it can read the instructions therein and then respond by issuing an advertising message including whatever form of response the smoking substitute device has demanded. When the smoking substitute device has received a satisfactory response from the first mobile device, it can then initiate a pairing process, wherein the two devices share an encryption key or other authorisation data, in order to identify each to the other and form a secure wireless communication link between the two devices. When this link has been established, the two devices are "paired". Preferably, the two devices will store the encryption keys, and reuse them each time they reconnect to one another. If this happens, they will have established a "bonded" wireless communication link to one another.

It will be appreciated that other protocols may be followed, in order to form a bonded communication link between the smoking substitute device and the first mobile device.

Once the initial communication bonded communication link has been formed, at step 440, between the smoking substitute device and the master controller mobile device, the devices will be configured to ensure that said communication bond is exclusive. When the smoking substitute is operating in this manner, it is in its so-called "whitelist operating mode". The identity of the master controller will, in this embodiment, be stored in a whitelist in the memory of the smoking substitute device and the device will be configured to communicate only with the devices identified on the whitelist (which, at this point in the method 400, is just the master controller mobile device.) Once it is operating in whitelist operating mode, subsequent advertising messages issued by the wireless interface of the smoking substitute device will only "look for" the master controller mobile device, unless the user permits communication between the smoking substitute device and another, different mobile device. This means that no other mobile devices will be able to "see" the smoking substitute device unless instructed by the master controller mobile device. Moreover, any data transfer messages from the smoking substitute device will be directed only to the master controller mobile device, unless instructed to the contrary by the master controller mobile device, as detailed further below.

Ensuring that the wireless communication bond between the smoking substitute device and the master controller mobile device is exclusive - unless the user permits a selected exception - can be achieved through any suitable combination of hardware and/or software means. For example, by virtue of having established a bonded communication link with the first mobile device, the smoking substitute device may be configured to limit its advertisement messages to that mobile device only, for example by using the address or other identifying information for the first mobile device,, unless a further instruction regarding a selected exception to that rule is issued by the master controller mobile device to the smoking substitute device.

As discussed above, it is possible that a user will want his or her smoking substitute device to be configured for communication with more than one mobile device, at a given time. At step 450, therefore, the user can determine which other mobile device(s) he or she wishes to authorise, for communication with his or her smoking substitute device. This step 450 does not have to be taken at all and, if taken, it does not have to happen immediately after the initial communication bond between the smoking substitute device and the master controller mobile device has been established. It can be done at any time, once that initial bond has been established, in accordance with user preferences.

If and when the user wishes to implement it, the next step 460 is to use the application on the master controller mobile device, to authorise one or more additional mobile devices, specifically selected by the user, to also communicate with the user's smoking substitute device. As mentioned above, the additional mobile devices could be, for example, mobile phones, smart phones, tablets or laptop. The user will then issue instructions, from the master controller mobile device, to allow communication between the smoking substitute device and the selected additional mobile devices. The user can issue those instructions via the user interface(s) of the master controller mobile device, using input options provided by the application.

Depending on the particulars of the devices and of the application concerned, there may be several options as to how the user's instructions are implemented, to permit one or more selected additional mobile devices to communicate with the smoking substitute device. For example, the application on the master controller mobile device may instruct the smoking substitute device to send an advertising Bluetooth™ message that specifically "looks for" the selected additional mobile devices, for bonding. For example, the user may, via the application, provide address information or other identifying information for the selected additional mobile device(s), to the smoking substitute device, which it can use to direct its advertising message. In such an embodiment, the selected additional mobile device(s) should be in wireless communication with the first mobile device, for their address information to be known to it. The selected additional mobile device(s) may have to have the application installed, in order to effect transmission of data such as address information, to the first mobile device. The smoking substitute device may be configured to, upon receipt of address information or other identifying information for the selected additional mobile device(s), initiate a bonding process with the selected additional mobile device(s), as described above at step 440 for the first mobile device. Once the bonding process has been successfully completed for each selected additional mobile device, the smoking substitute device will add the device(s) to its whitelist, which is a stored record of devices with which it is permitted to wirelessly communicate. Thereafter, the device's advertising messages would be directed to all the devices on the whitelist.

Alternatively, for example, the master controller mobile device may instruct the smoking substitute device to switch back to being in an "advertising operating mode" and to temporarily advertise to any devices, when it is initiating the process of bonding to a second mobile device, but to accept responses only from the selected additional mobile device(s) to be bonded to it. When it is in an advertising operating mode, a plurality of other mobile devices would be able to "see" signals from the smoking substitute device, but the smoking substitute device would only accept response from, and initiate bonding with, the devices that the user has selected.

The first mobile device may provide instructions to the selected additional mobile device(s) - for example, via the application - regarding the type or form of response that the smoking substitute demands, in response to its advertising messages, in order for it to initiate the establishment of a bonded communication link with a mobile device. The smoking substitute device may only initiate a bonding process with the selected additional mobile devices if and when they provide a suitable response to its advertising message.

Whichever steps are followed, it will be understood that, at step 470, the smoking substitute device can pair with, and preferably bond with, the user's selected additional mobile device(s), based on instructions input via the application on the master controller mobile device.

Any suitable combination of hardware and software means can be used to implement the communications described above. The pairing between the smoking substitute device and the selected additional mobile devices can include any suitable security measures such as the sharing of encryption keys, codes or passwords. Moreover, installation and running of the application on the user's selected additional mobile devices can include any suitable security measures. For example, the application may be configured such that the user needs to create and ID and password, wherein there can only be one master controller device for that ID and password and/or wherein a particular mobile device can only be associated with (or registered to) a single ID for that application. Moreover, the application may be configured such that it can only communicate with an individual smoking substitute device from a limited number of mobile devices. Or there may be a limit on the number of mobile devices that the application can be run on, for an individual user ID.

When the application is downloaded to the user's selected additional mobile devices, the user may have to log in using their already-established ID and password and/or may have to identify the selected additional mobile devices as being "subordinate" or additional to the master controller. Or any other suitable steps may be taken, to ensure that there is a single "master controller" mobile device that oversees and controls the bonded communication links that can be made between the user's smoking substitute device and any other mobile devices. This enables the connections between the smoking substitute device and any mobile devices to be restricted and securely managed. The number of permitted mobile devices that can communicate with an individual smoking substitute device should be finite, and relatively small. For example, there may be a maximum of 10 so-called "permitted" mobile devices per smoking substitute device, with which it is paired for communication. According to an embodiment, there may be a maximum of 8 permitted mobile devices per smoking substitute device.

The list of permitted mobile devices, with which has established bonded communication links, is stored in the memory of the smoking substitute device. This step may happen automatically, or it may require user input, for example via the application on the master controller mobile device. The stored list of permitted mobile devices may be referred to as a "whitelist". The smoking substitute will be configured such that future communications from it may be sent to, and seen by, all the devices on the stored whitelist, without the need to manually reconnect or re-pair with each device, every time a connection is required. Instead, that connection will happen automatically and securely. This is more efficient from a user perspective and from a processing perspective, for the control unit of the smoking substitute device.

The smoking substitute device may be configured so that it defaults to operating in whitelist operating mode, if there are one or more mobile devices identified in the whitelist. According to an embodiment, there may be an option to temporarily override this default position, for example via a user input to the application, running on the master controller mobile device.

The predetermined maximum number of devices that may be recorded on the whitelist should be large enough to enable a user to communicate with his or her smoking substitute device from a number of mobile devices that the typical user it likely to own or use. For example, the user may wish to communicate from his or her personal mobile phone, work mobile phone, tablet computer and/or laptop computer. The size of the predetermined maximum number should also give some scope for the user adding a new mobile device to the permitted list, without necessarily having to delete a pre-existing permitted mobile device (for example, an old device that no longer functions.) It should also give some scope for multiple users to communicate from their mobile devices to a single smoking substitute device. However, the whitelist should not present a disproportionate burden on the memory or control unit of the smoking substitute device, such that the list should be relatively small. Keeping the list relatively small also enhances the security of the system, by inherently limiting the number of communication permissions that can be granted at a given time, for an individual smoking substitute device.

The type of data that can be passed between the smoking substitute device and its bonded mobile devices has already been discussed, above. The smoking substitute device may be configured not to send all data to all its bonded mobile devices, at all times. For example, it may be configured to send data just to the master controller mobile device but for that data to be subsequently accessible to the other mobile devices, via the application. Moreover, although it will be automatically paired for communication with the permitted mobile devices on the stored whitelist, the smoking substitute device may be configured not to accept all types of instruction from all the devices on the list. For example, according to an embodiment, the additional/subordinate mobile devices should not be permitted to add further devices to the whitelist, or to remove any devices from the existing whitelist. Certain of the mobile devices on the whitelist may have further restrictions on them, in terms of what instructions they can send to the smoking substitute device and/or on the specific data from the smoking substitute device that they can access. For example, there may be a restricted permission for some devices, wherein they can use the application to look at, for example, tank fill level data for the smoking substitute device but they cannot access usage data.

According to an embodiment, which varies from the particular example of Fig. 4, it may be possible for an additional (or a "second") mobile device to "see" the smoking substitute device, within the wireless communication network, even after it has bonded with the first "master controller" mobile device. That additional mobile device may attempt communication with the smoking substitute device. However, the application on the master controller mobile device will ensure that any such communication attempt(s) will be ignored or blocked by the smoking substitute device, unless the additional mobile device that sent the communication attempt(s) has been granted a specific communication permission for the smoking substitute device, by the application that has been installed on the master controller mobile device. For example, the application may be configured to set a flag in the smoking substitute device, to prohibit communication with other devices that are not in the whitelist, even if the smoking substitute device is "visible", i.e. receptive to inquiry, from such devices.

Although the specific embodiments described herein involve establishing "bonded" communication links, in which the devices store the exchanged encryption keys, and use them again for future connection, it may be possible for one or more "paired" communication links to be formed instead, between the smoking substitute device and a mobile device. In a "paired" communication link, the devices exchange encryption keys or other authorisation data, in order to establish a secure communication link therebetween, but they do not store the encryption keys for re-use in future. For example, it may be preferable, in some embodiments, for one or more of the user's selected additional mobile devices to establish a paired communication link with the smoking substitute device, instead of a bonded communication link.

According to an embodiment, the whitelist stored on a smoking substitute device can be altered using hardware means within the smoking substitute device. In particular, the identities of one or more mobile devices that are currently, at any given time, listed on the whitelist can be deleted from the whitelist. According to a particular embodiment, operation of hardware means can be used to cause deletion of the identities of all of the mobile devices that are currently, at any given time, listed on the whitelist. This has the effect of resetting the smoking substitute device. As a result of this resetting, and because the whitelist will consequently be empty, the smoking substitute device will transition from its previous state (or "whitelist operating mode"), in which it wirelessly communicated exclusively with the mobile device(s) listed on the whitelist as described in detail above, to a more general state (or "advertising operating mode") in which it does not have any specific user-selected wireless communication links. The smoking substitute device therefore will revert back to directing its wireless advertising communications, and therefore broadcasting information defining its intentions, to a plurality of mobile devices within the wireless communication range of the smoking substitute device. The mobile devices that can "see" or respond to the smoking substitute device when it is in this more general state will not be filtered or user-selected, except that they will each need to have a wireless interface configured for communication over the communications network via which the smoking substitute device issues its wireless communications, and be located within the requisite distance range for those wireless communications.

Referring back to Fig 3(a), it can be seen that the main body 120 of a smoking substitute device can comprise some additional components 138. These may be software components and/or hardware components. Some examples of possible additional hardware components include one or more lights, an LED screen, a battery charging control circuit, an air flow sensor for sensing an inhale action, a consumable data reader for reading data from a consumable (or "pod") inserted into the smoking substitute device, a charging port 137 for insertion of a cable for charging the smoking substitute device, and a motion sensor (e.g. accelerometer) 139 for detecting movement of, or in relation to, the device. The smoking substitute device may also include a button or switch, such as an "on/off" button, for activating and deactivating operation of the smoking substitute device. Alternatively, a smoking substitute device may be provided without a button. In such embodiments, the other components of the smoking substitute device may be useable for activation and deactivation. For example, detection of an inhale action by the air flow sensor may activate operation of the smoking substitute device. Moreover, some of the additional components listed here may be comprised within a consumable, in embodiments in which there is a consumable separable from the main body of the smoking substitute device.

According to an embodiment of the present invention, one or more of the hardware components (or "hardware mechanisms") of a smoking substitute device may be used to reset the device from being in a whitelist operating mode into being in a more general advertising operating mode. According to such an embodiment, the hardware components are configured to detect a particular user input or action or series of actions and, in response to that detection, trigger the resetting of the smoking substitute device. The user input, action or actions may have to occur in a predefined order and/or they may all have to occur within a predetermined time period. In order to prevent accidental resetting of the device, and to ensure greater reliability and greater chance of success when a user wishes to deliberately reset the device, there should be a pre-determined list of actions or movements, to be made in relation to specific hardware components of the device, in order to effect the resetting.

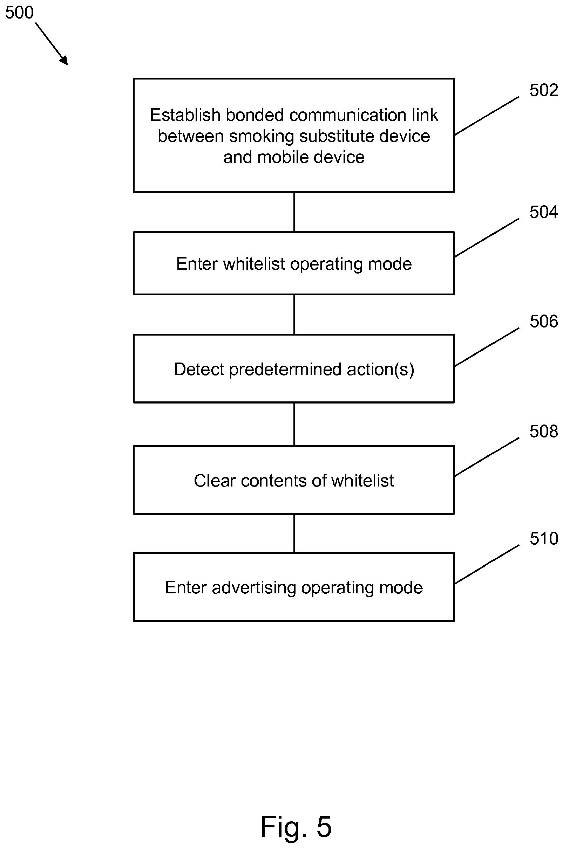

Fig. 5 is a flowchart that illustrates a method 500 of resetting the whitelist that is an embodiment of the invention. The method begins with a step 502 of establishing a bonded communication link between the smoking substitute device and a first mobile device, e.g. using the technique discussed above with reference to Fig. 4. When the bonded communication link is established, the method continues with a step 504 of entering the whitelist operating mode, in which the smoking substitute device is prevented from establishing a communication link with another mobile device unless that mobile device is identified in the whitelist or a communication link is otherwise permitted by an instruction from an application on the first mobile device.

The method continues with a step 506 of determining a predetermined action or a combination of predetermined actions that are indicative of a reset instruction. For example, according to a specific embodiment, the additional hardware components of the smoking substitute device include a port for insertion of a cable for electrically charging the device and an accelerometer for detecting movement of, or in relation to, the smoking substitute device. In this embodiment, a specified sequential combination of actions must be carried out with respect to the port and the accelerometer. The sequence of required actions is as follows:
1. Inserting (or "plugging in") a charging cable, into the port;
   and, within 10 seconds of carrying out step 1, above,
2. Detecting 3 taps at the accelerometer.

The charging cable may not need to be connected, at its other end, to an electrical power supply. Rather, the requirement for step 1 may simply be the mechanical insertion of a suitable charging cable into the receiving means of the port. The control unit, or a suitable sensor that communicates with the control unit, is configured, in such an embodiment, to detect the mechanical connection between the end of the charging cable and the receiving part of the port. For example, the cable and port may be shaped so that the insertion of the cable into the port causes a switch to be depressed or causes some other physical actuation, which generates a detectable signal for the control unit to receive. The control unit can use that received signal to help determine next steps.

Alternatively, there may be a requirement for the cable to be connected to an electrical power supply. In such an embodiment, the control unit, or a suitable sensor that communicates with the control unit, is configured to detect the activation of an external electrical power supply to the device, via the charging cable. The control unit can use that detection to help determine next steps.

As regards Step 2; the smoking substitute device is configured so that a so-called "tap" movement is recognisable from a signal received by the control unit from the accelerometer. For example, there may be specific parameters stored within the smoking substitute device that determine what type, magnitude, speed or frequency of motion constitutes a "tap" within the meaning of step 2. The tap may comprise the (gentle) hitting of the device against a surface. The surface may have to be of sufficient hardness, in order for the tap to be recognised by the accelerometer. For example, it may have to be a tap against a relatively hard surface such as a wooden table as opposed to a relatively soft surface such as a pillow.

Preferably, the "tap" movement should be readily distinguishable from other types of movement that the accelerometer may detect during routine use or transportation of the smoking substitute device. Moreover, the user should preferably be provided with clear instructions as to how to perform a "tap" movement as part of the resetting process. Those instructions may, for example, be provided in a user instruction manual.

When it is determined, by the control unit, that the correct sequence of steps 1 and 2 have been detected, the method continues with a step 508 of clearing the contents of the whitelist. The control unit can implement any suitable steps in order to clear the whitelist, i.e. by deleting the identities of any mobile devices stored thereon, thereby effectively resetting the smoking substitute device. According to an embodiment, the identities of the mobile devices that had been stored on the whitelist, before reset, may be transferred to an archive memory either within the smoking substitute device or externally, for example on an application.

It should be appreciated that the example above of steps 1 and 2 is just one possible sequence of steps that may be required in order to reset the smoking substitute device. Any other suitable combination of steps, instead of or in addition to steps 1 and 2 above, may be required for reset. Such steps may involve the charging port and/or the accelerometer and/or they may involve other hardware components such as the air flow sensor or any of the other example additional hardware components listed earlier herein. Preferably, the required combination of steps should be different to any usual or routine patterns of action or movement that a user of the smoking substitute device may make during routine use of the device, in order to avoid accidental reset.

According to an embodiment, there may be an option to undo reset if the required combination of steps is done by accident, or if the user changes his or her mind. For example, a warning light on the device may flash for a short period of time, or example 10 seconds, to warn the user that whitelist reset is about to happen. Alternatively, the warning may be delivered via a mobile device currently on the whitelist, for example via an application running on that mobile device. If the user detects a whitelist reset warning and does not want reset to happen, he or she may be able to take some other steps, possibly again using the hardware components that are operable to initiate reset, in order to undo the instruction and thereby maintain the whitelist and avoid reset.

Initiating reset using a predetermined combination of steps performed using hardware components of the smoking substitute device can be particularly useful if the device does not have an on/off button. In embodiments that do have an on/off button, that button may have a role to play in the reset process, either on its own or in combination with other hardware components of the device. For example, holding the on off button time for a pre-determined length of time may form part of the reset process.

Preferably the combination of steps required to effect reset of a smoking substitute device should be non-obvious to a non-authorised user. According to an embodiment, there may be security steps involved in the process in order to ensure that the person carrying out the reset is the authorised user. For example, the user may have an email address to which the smoking substitute device was registered when the user purchased the device, or when he or she began using the application for linking mobile devices to the smoking substitute device. There may be a requirement for the user to provide confirmation via that email address, or for example by logging in to the application on any mobile device and providing security information, before the smoking substitute device can execute the reset.

According to an embodiment, the smoking substitute device may be configured to permit the user to record a combination of hardware-related steps that the control unit of the smoking substitute device will subsequently recognise as being the required combination of hardware-related steps in order to effect reset of the device. Alternatively, the smoking substitute device may be configured to permit the user to select a reset operation from among a plurality of preset combinations of hardware-related steps. For example, the reset operation may be selected as one or a combination of two or more actions from 5 possible hardware-related steps. Once selected, the combination may then be stored as the required steps for effecting reset. The selection may be done directly at the smoking substitute device or done, for example, via the application.

What is reset has occurred, the whitelist will be empty and the method continues with a step 510 of entering the advertising operating mode, i.e. the smoking substitute device transitions back to operating a mode in which it can establish a new communication link between the smoking substitute device and one or more mobile devices. As will be understood from the detailed description of Fig. 4 above, when a user-selected bonded wireless communication link is established between the smoking substitute device and a mobile device, the smoking substitute device will transition once more to operating in whitelist operating mode, wherein it will only communicate with the selected device(s) on the whitelist and will not broadcast to non-linked mobile devices.

The term "user" referred to in the method of Fig. 4 is intended to be illustrative and not to be limiting. In general, the term "user" is to be understood to mean the person or persons who have the authority to determine which mobile device(s) a smoking substitute device should communication with. For example, the "user" may be the person, person(s) or entity who own, use and/or control the use of the smoking substitute device. It is possible for the person who has the authority to determine which mobile device(s) a smoking substitute device should communicate with to be different to the person who actually uses the smoking substitute device for smoking substitute action.

The term "master controller" is intended to be illustrative and not to be limiting. In general, the term "master controller" is to be understood to mean the first mobile device that the user selects to establish an exclusive communication link with his or her smoking substitute device. It should be the device via which the user can grant communications permissions to a restricted number of other mobile devices, for communication between those devices and the smoking substitute device. In practice, the user may wish to select the mobile device which he or she uses most often - such as his or her personal mobile phone or smartphone - to be the "first" or "master controller" mobile device.

The term "whitelist" is intended to be illustrative and not to be limiting. In general, the term "whitelist" is to be understood to mean a recorded group, list or other collection of data, which identifies the mobile devices to which the smoking substitute device is bonded (or paired), and therefore with which it is permitted to communicate. The precise nature of the data that is stored can vary, dependent on the particulars of the devices concerned. The concept of the so-called "whitelist" is intended to represent the opposite of a "blacklist", which is a well known term that is indicative of items or actions being banned or non-authorised.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A smoking substitute device comprising:
a memory which stores a whitelist configured to identify one or more devices with which the smoking substitute device is permitted to wirelessly communicate; and
a hardware component other than a button;
wherein the smoking substitute device is configured to operate in either:
a whitelist operating mode in which the smoking substitute device is configured to advertise to only the one or more devices identified by the whitelist; or
an advertising operating mode in which the smoking substitute device is configured to advertise to devices regardless of whether those devices are identified by the whitelist; and
wherein the smoking substitute device is configured to, upon detection of a predetermined action that involves the hardware component, transition from operating in the whitelist operating mode to operating in the advertising operating mode.

2. The smoking substitute device of claim 1, wherein the smoking substitute device has no button.

3. The smoking substitute device of claim 1 or claim 2, wherein the hardware component includes a port for connecting a cable for charging the smoking substitute device, and wherein the predetermined action includes connecting a cable for charging the smoking substitute device to the port.

4. The smoking substitute device of any of claims 1 to 3, wherein the one or more hardware components includes an accelerometer, and wherein the predetermined action includes performing a predetermined movement with the smoking substitute device that is detectable by the accelerometer

5. The smoking substitute device of claim 4, wherein the predetermined movement includes a tapping movement.

6. The smoking substitute device of any of claims 1 to 5, wherein the smoking substitute device includes a plurality of hardware components, other than a button, and wherein the predetermined action comprises a combination of predetermined actions that involve the plurality of hardware components.

7. The smoking substitute device of claim 6, wherein the plurality of hardware components include a port for connecting a cable for charging the smoking substitute device and an accelerometer, and wherein the combination of predetermined actions includes an action which uses the port and an action that uses the accelerometer.

8. The smoking substitute device of claim 6 or 7, wherein the transition from the whitelist operating mode to the advertising operating mode occurs upon detection of the combination of predetermined actions within a predetermined time window.

9. The smoking substitute device of any preceding claim further comprising a control unit configured to monitor the hardware component, wherein the control unit is configured to receive a signal from the hardware component that is indicative of the predetermined action.

10. The smoking substitute device of any preceding claim further configured to clear contents of the whitelist from the memory upon transitioning from the whitelist operating mode to the advertising operating mode control unit.

11. A method of managing a smoking substitute device, wherein the smoking substitute device comprises a memory which stores a whitelist configured to identify one or more devices with which the smoking substitute device is permitted to wirelessly communicate, and a hardware component other than a button, wherein the smoking substitute device is configured to operate in either: a whitelist operating mode in which the smoking substitute device is configured to advertise to only the one or more devices identified by the whitelist; or an advertising operating mode in which the smoking substitute device is configured to advertise to devices regardless of whether those devices are identified by the whitelist, and wherein the method comprises:
when operating in the whitelist operating mode, detecting a predetermined action that involves the hardware component; and
transitioning from operating in the whitelist operating mode to operating in the advertising operating mode.

12. The method of claim 11, further comprising clearing contents of the whitelist from the memory upon transitioning from the whitelist operating mode to the advertising operating mode control unit.

13. The method of claim 11 or 12 further comprising, after transitioning to the advertising operating mode, configuring the smoking substitute device to establish a wireless communication link with a first mobile device.

14. The method of any of claims 11 to 13, wherein the hardware component includes a port for connecting a cable for charging the smoking substitute device and an accelerometer, and wherein the predetermined action uses the port and/or the accelerometer.

15. The method of any of claims 11 to 14, wherein the step of transitioning from the whitelist operating mode to the advertising operating mode occurs upon detection of the combination of predetermined actions within a predetermined time window.
